# FASCICULE DE BREVET EUROPEEN

(11) **EP 3 641 268 B1**
(45) Date de publication et mention de la délivrance du brevet: **24.02.2021**
(21) Numéro de dépôt: 19203590.5
(22) Date de dépôt: 16.10.2019
(51) Int. Cl.: H04W 12/12, H04L 29/06, H04W 12/06

(54) **PROCÉDÉ DE COMMUNICATION D'UN OBJET AVEC UN RÉSEAU D'OBJETS CONNECTÉS POUR SIGNALER QU'UN CLONE SE FAIT POTENTIELLEMENT PASSER POUR L'OBJET DANS LE RÉSEAU**
KOMMUNIKATIONSVERFAHREN EINES OBJEKTS MIT EINEM NETZWERK VON VERBUNDENEN OBJEKTEN ZUR SIGNALISIERUNG, DASS SICH EIN KLON POTENZIELL FÜR DIESES OBJEKT IN DIESEM NETZWERK AUSGIBT
METHOD FOR COMMUNICATION OF AN OBJECT WITH A NETWORK OF CONNECTED OBJECTS TO REPORT THAT A CLONE COULD POTENTIALLY BE IDENTIFIED AS THE OBJECT IN THE NETWORK

(30) Priorité: 16.10.2018 FR 1871190
(43) Date de publication de la demande: 22.04.2020
(73) Titulaire: Idemia Identity & Security France, 92400 Courbevoie (FR)
(72) Inventeur: FAGES-TAFANELLI, Yoann, 92400 Courbevoie (FR); CUZZOLIN, Aurélien, 92400 Courbevoie (FR); BLANCO, Fabien, 92400 Courbevoie (FR); BERTHIER, Maël, 92400 Courbevoie (FR)
(74) Mandataire: Regimbeau

(56) Documents cités:
- EP-A1- 3 310 082
- EP-A1- 3 343 967

## Description

### DOMAINE DE L'INVENTION

La présente invention se rapporte au domaine des objets connectés.

L'invention concerne tout particulièrement un procédé de communication d'un objet avec un réseau d'objets connectés pour signaler qu'un clone se fait potentiellement passer pour l'objet dans le réseau.

L'invention trouve avantageusement application dans des réseaux d'objets connectés conformes à la spécification LoRaWAN®.

### ETAT DE LA TECHNIQUE

La spécification LoRaWAN définit un protocole de communication pour un réseau d'objets connectés. Dans un tel réseau, un objet (parfois appelé terminal ou « end-device » en anglais) est amené à communiquer avec un serveur faisant partie d'un tel réseau.

Conventionnellement, un objet conforme à la spécification LoRaWAN émet une requête d'adhésion « join-request » vers un serveur du réseau de sorte à rejoindre le réseau. C'est une fois que le serveur a accepté cette requête que l'objet peut ensuite transmettre des données utiles au réseau.

Pour éviter que l'objet ne soit confondu avec un autre nœud du réseau, l'objet dispose d'un identifiant unique DevUID et d'au moins une clé secrète (une clé AppKey dans la version 1.0 de la spécification LoRaWAN, une paire de clés AppKey et NwKkey dans la version 1.1). L'identifiant est envoyé en clair dans la requête d'adhésion. Par ailleurs, chaque clé secrète est utilisée pour sécuriser le contenu requête d'adhésion, sans toutefois être divulguée.

Bien entendu, un tiers malveillant parvenant à découvrir la clé secrète pourrait constituer un clone de l'objet, afin que ce clone émette de son côté des requêtes d'adhésion de même contenu que celles émises par l'objet, se faisant ainsi passer pour ce dernier auprès du réseau. Ce type d'attaque est appelé attaque par clonage.

Pour éviter de telles attaques par clonage, il est généralement prévu dans l'objet un élément sécurisé (Secure Element) faisant office de coffre-fort inviolable pour stocker et garder secrète garder la clé.

Toutefois, l'incorporation d'un tel élément sécurisé représente un surcoût de fabrication d'un objet connecté ; il existe donc de nombreux objets connectés ne disposant pas d'un tel élément sécurisé pour se prémunir d'attaques par clonage.

On connaît par ailleurs de l'état de la technique plusieurs procédés pour détecter un clone dans un réseau d'objets connectés.

Un premier procédé connu pour détecter un clone consiste à envoyer à un objet qui souhaite rejoindre le réseau une requête d'authentification. Pour ne pas être considéré comme un clone, l'objet doit alors répondre à la requête avec un message de réponse contenant une clé d'anti-clonage.

Selon un deuxième procédé, un cloné est détecté au moyen d'un nombre aléatoire transmis dans le réseau. Le document EP 3 343 967, 4 juillet 2018 (2018-07-04), décrit un procédé mis en œuvre par un dispositif pour rejoindre un réseau.

Les procédés proposés présentent toutefois l'inconvénient de nécessiter des modifications substantielles au niveau des objets à protéger contre du clonage (opérations cryptographiques additionnelles, stockage de données supplémentaires au niveau des objets, communications additionnelles entre objets).

### EXPOSE DE L'INVENTION

Un but de l'invention est de signaler l'existence potentielle d'un clone se faisant potentiellement un objet dans un réseau connecté, d'une manière très simple et peu coûteuse à implémenter.

Il est donc proposé un procédé de communication d'un objet avec un serveur d'un réseau d'objets connectés pour signaler qu'un clone se fait potentiellement passer pour l'objet dans le réseau, le procédé comprenant les étapes suivantes mises en œuvre par l'objet :
- transmission au serveur d'une requête d'adhésion de l'objet au réseau d'objets connectés,
- après la transmission de la requête d'adhésion, détection d'un rejet ou d'une non-prise en compte d'un message de référence transmis par l'objet au serveur,
- en réponse à la détection, transmission au serveur d'un message d'alerte indiquant le rejet ou la non prise en compte.

Le procédé de communication selon l'invention peut également comprendre les caractéristiques suivantes, prises seules ou en combinaison lorsque cela est techniquement possible.

De préférence, le message d'alerte est une nouvelle requête d'adhésion au réseau d'objets connectés.

De préférence, la requête d'adhésion transmise avant la détection comprend une première valeur n'indiquant pas de rejet ou de non prise en compte d'un quelconque message transmis par l'objet au serveur, et la nouvelle requête d'adhésion comprend, en lieu et place de la première valeur, une deuxième valeur indiquant le rejet ou la non prise en compte.

De préférence, la première valeur est un nonce destiné à être utilisé par le serveur pour détecter des attaques par rejeu.

De préférence, la première valeur occupe un emplacement prédéterminé de N bits dans la requête d'adhésion transmise avant la détection, la deuxième valeur occupe le même emplacement prédéterminé de N bits dans la nouvelle requête d'adhésion, et la deuxième valeur est égale à zéro ou 2N-1.

De préférence, la première valeur et la deuxième valeur occupent le champ DevNonce défini par une spécification LoRaWAN.

De préférence, le message de référence est transmis par l'objet au serveur après la requête d'adhésion, et transporte par exemple des données utiles.

De préférence, il est détecté une non prise en compte du message de référence lorsqu'aucun accusé de réception du message de référence n'est reçu par l'objet dans un délai prédéterminé à compter de la transmission du message de référence.

De préférence, le procédé de communication comprend en outre un rejet ou une non prise en compte par le serveur d'une requête d'adhésion qui est transmise au serveur après le message d'alerte et qui comprend un identifiant unique propre à l'objet.

De préférence, la requête d'adhésion ou le message de référence comprend un code d'intégrité généré à partir d'une première clé secrète propre à l'objet, et dans lequel le message d'alerte comprend un code d'intégrité généré à partir d'une deuxième clé secrète propre à l'objet différente de la première clé secrète.

De préférence, le code d'intégrité de la requête d'adhésion ou du message de référence est généré par application d'une fonction prédéterminée à la première clé secrète propre à l'objet, et dans lequel le code d'intégrité du message d'alerte est généré par application de la même fonction prédéterminée à la deuxième clé secrète propre à l'objet.

Il est également proposé un objet comprenant une interface de communication avec un serveur d'un réseau d'objets connectés, l'objet comprenant par ailleurs un processeur configuré pour :
- commander une transmission au serveur d'une requête d'adhésion de l'objet au réseau d'objets connectés,
- après la transmission de la requête d'adhésion, détecter un rejet ou d'une non-prise en compte d'un message de référence transmis par l'objet au serveur,
- en réponse à la détection, commander une transmission au serveur d'un message d'alerte indiquant le rejet ou la non prise en compte.

Il est également proposé un système comprenant l'objet connecté susmentionné, et un serveur d'un réseau d'objets connecté configuré pour, sur réception du message d'alerte, mettre en œuvre un traitement permettant de détecter si un clone se fait passer pour l'objet dans le réseau.

Le serveur peut être configuré pour rejeter ou ne pas prendre en compte une requête d'adhésion transmise au serveur après le message d'alerte et qui comprend un identifiant unique propre à l'objet.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 illustre de façon schématique un système de navigation selon un premier mode de réalisation de l'invention ;
- La figure 2 est un organigramme d'étapes d'un procédé de communication selon un mode de réalisation de l'invention ;
- La figure 3 illustre schématiquement des messages échangés par un objet, un serveur de réseau d'objets connectés et un clone cherchant à se faire passer pour l'objet dans le réseau, au cours d'une mise en œuvre du procédé de la figure 2.

Sur l'ensemble des figures, les éléments similaires portent des références identiques.

### DESCRIPTION DETAILLEE DE L'INVENTION

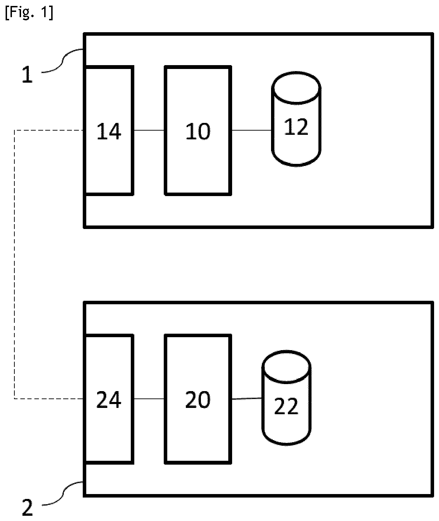

On a schématiquement représenté **en** **figure 1** un objet 1 susceptible d'être connecté à un réseau d'objets connectés via un serveur 2.

L'objet 1 comprend au moins un processeur 10, au moins une mémoire 12 et une interface de communication 14 avec le serveur 2.

Le processeur 10 est configuré pour exécuter des programmes d'ordinateur.

L'interface de communication 14 est par exemple du type radio sans fil.

Dans ce qui suit, on prendra l'exemple d'une interface de communication 14 destinée à émettre ou recevoir des messages conformes à la spécification LoRaWAN®, auquel cas le réseau d'objets connecté est un réseau également conforme à cette spécification LoRaWAN.

La mémoire 12 de l'objet 1 comprend au moins une mémoire non volatile est destiné à stocker des données de calcul de manière persistante (HDD, SSD, Flash, etc.), en particulier les données suivantes, lorsque la spécification LoRaWAN version 1 est utilisée :
- DevEUI : un identifiant unique propre à l'objet 1, assimilable à un numéro de série.
- AppEUI : un identifiant d'application unique propre à un fournisseur d'application de l'objet 1. Il permet de classer différents objets tels que l'objet 1 par application.

Dans la spécification LoRaWAN version 1.1, pouvant également être utilisée, AppEUI et remplacée par une donnée JoinEUI.

Similairement, le serveur 2 comprend au moins un processeur 20, au moins une mémoire 22 et une interface de communication 24 avec au moins un objet tel que l'objet 1.

Le processeur 20 du serveur 2 est également configuré pour exécuter des programmes d'ordinateur.

La mémoire 22 du serveur 2 comprend au moins une mémoire non volatile est destiné à stocker des données de calcul de manière persistante (HDD, SSD, Flash, etc.).

L'interface de communication 24 est configurée pour interagir avec l'interface de communication 14 de l'objet 1 ; elle est par conséquent du même type.

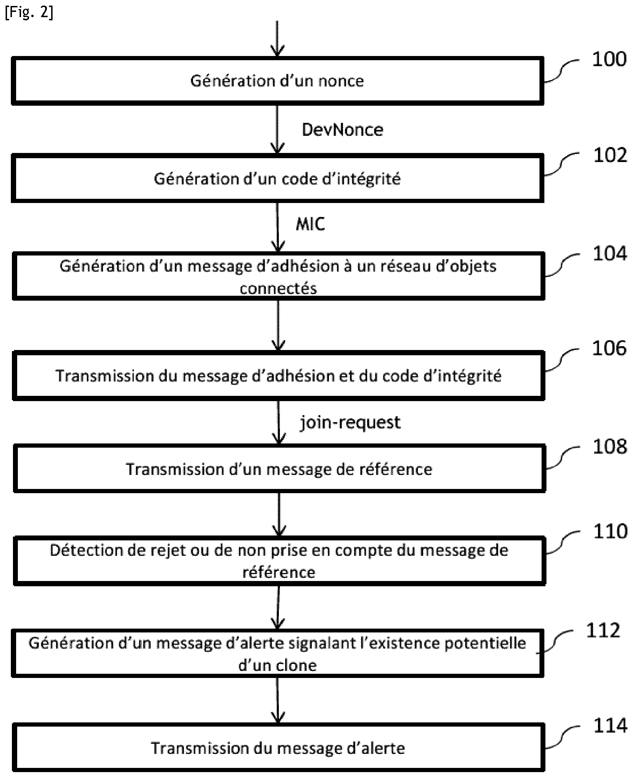

En référence à l'organigramme de la **figure 2****,** un procédé pour signal l'existence potentielle d'un clone de l'objet 1 dans le réseau d'objets connectés comprend les étapes suivantes.

Le processeur 10 de l'objet 1 génère un nonce (étape 100). Comme il sera détaillé ci-après, ce nonce est destiné à être passé en paramètre d'une requête d'adhésion à un réseau d'objets connectés, transmise par l'objet 1 au serveur 2. Le serveur 2 garde trace de certaines valeurs de ce nonce utilisées par l'objet 1 par le passé, et ignore toute requête d'adhésion qui réutiliserait l'une de ces valeurs, de manière à assurer une protection contre des attaques par rejeu.

Le nonce est une valeur comprise dans une plage de valeurs prédéterminées codables sur N bits.

La plage de valeurs ne comprend pas toutes les valeurs prédéterminées qui sont codables sur N bits. Autrement dit, cette plage comprend un nombre de valeurs entières strictement inférieur à 2^{N}.

La plage de valeurs comprend par exemple 2^{N}-1 valeurs ; il existe alors une seule valeur codable sur N bits que ne peut pas prendre le nonce.

Le nonce est par exemple la donnée DevNonce définie dans la spécification LoRaWAN. Cette donnée est codée sur deux octets (N=16). Le nonce peut alors avoir 65535 valeurs différentes (et non 653536 comme proposé dans les spécifications LoRaWAN).

Le processeur 10 de l'objet 1 génère une requête d'adhésion à un réseau d'objets connectés (étape 104).

La requête d'adhésion est un message « join-request » conforme à la spécification LoRaWAN. Le message join-request comprend alors, de manière conventionnelle, les données suivantes : DevEUI, AppEUI (ou JoinEUI) et DevNonce.

L'objet 1 génère par ailleurs un code d'intégrité MIC relatif à la requête d'adhésion (étape 102). Ce code d'intégrité MIC a pour but d'authentifier la requête d'adhésion auprès d'un destinataire, autrement dit, de permettre à un tel destinataire de vérifier si la requête d'adhésion a été émis par un objet 1 agréé et si les données contenues dans la requête d'adhésion sont cohérentes.

Le code d'intégrité MIC est généré de manière classique via un chiffrement AES utilisant au moins une clé secrète propre à l'objet 1 : par exemple, la clé AppKey dans la version 1.0 de la spécification LoRaWAN, une paire de clés AppKey et NwKkey dans la version 1.1 de la spécification LoRaWAN.

La requête d'adhésion est transmise par l'interface de communication au serveur 2 (étape 106). Le code d'intégrité MIC est également transmis au serveur 2 dans la requête d'adhésion.

La requête d'adhésion est reçue par l'interface de communication 24 du serveur 2, qui le transmet au processeur 20 pour être traitée.

Le processeur 20 met en oeuvre de manière classique un contrôle d'intégrité de la requête d'adhésion en s'aidant du code d'intégrité candidat MIC. Si ce contrôle se solde par un échec, alors la requête d'adhésion est rejetée ou ignorée par le serveur 2.

Par ailleurs, le processeur 20 compare la valeur DevNonce de la requête d'adhésion reçue avec un historique de valeurs de DevNonce préalablement reçues et mémorisées dans la mémoire 22. Si la valeur de DevNonce reçue et égale à l'une des valeurs de l'historique, le serveur 2 rejette ou la toute requête d'adhésion, de manière à assurer une protection contre des attaques par rejeu.

De façon conventionnelle, le serveur 2 transmet à l'objet 1 un message de réponse « join-accept », lui indiquant que la requête d'adhésion a été acceptée par le serveur 2. Sinon, le serveur 2 ne transmet par exemple aucun message de réponse « join-accept ».

L'objet 1, désormais adhérent au réseau d'objets connectés, peut transmettre au serveur 2 d'autres types de messages, notamment des messages formellement appelés dans la suite « messages de référence » (étape 108).

Pour être acceptés par le serveur 2, ces messages sont censés être cohérents avec la dernière requête d'adhésion reçue est acceptée par le serveur 2.

Dans le cas de LoRaWAN (spécification 1), cette cohérence est assurée par deux clés de session NwkSKey, AppSKey servant pour crypter et authentifier les messages échangés par l'objet 1 et le serveur 2. Côté objet 1, ces clés de session NwkSKey, AppSKey sont dérivées de la clé secrète AppKey, et sont renouvelées pour chaque nouvelle requête d'adhésion (à l'aide de compteurs). Ces clés de session sont par ailleurs déterminées par le serveur 2 sur la base des informations fournies dans la requête d'adhésion, sans pour autant que ces clés de session soit transmises en clair dans la requête d'adhésion, selon un procédé connu. Tous les messages de référence émis ultérieurement par l'objet 1 comprenant un code d'intégrité (champ MIC) qui est calculé sur la base des clés de session NwkSKey, AppSKey négociées avec le serveur 2.

Un exemple de message de référence est un message contenant des données utiles. On entend par données « utiles » des données différentes de métadonnées ayant pour fonction de contrôler la communication des données utiles.

Le message de liaison montante « uplink » défini dans la spécification LoRaWAN est un message transportant des données utiles et constitue par conséquent un exemple de message de référence.

Lorsque le serveur 2 reçoit un message de référence, il peut en accuser réception à l'objet 1 via un message d'accusé de réception qui est retourné à l'objet 1. En particulier, un message d'accusé de réception de type « ACK » peut être émis par le serveur 2 en réponse à la réception d'un message de liaison montante « uplink » demandant un tel accusé réception (« confirmed uplink »), dans le cas d'un réseau LoRaWAN.

Il est toutefois à noter qu'un message de liaison montante « uplink » d'un type ne nécessitant pas d'accusé de réception peut être émis par l'objet 1. Lorsque le serveur 2 reçoit ce type de message, il n'envoie donc pas d'accusé de réception « ACK » à l'objet 1.

Toutefois, il se peut que le serveur 2 ne transmette pas un tel message d'accusé de réception à l'objet 1 en réponse à un message de référence, et rejette ce message de référence.

Un tel phénomène survient typiquement lorsqu'un clone cherchant à se faire passer pour l'objet 1, transmet une requête d'adhésion au serveur 2 comprenant le DevUID permettant d'identifier en propre l'objet 1, et que cette requête d'adhésion est acceptée par le serveur 2, juste avant que l'objet 1 envoie un message de liaison montante.

En effet, l'acceptation par le serveur 2 de la requête d'adhésion émise par le clone entraîne une mise à jour par le serveur 2 des clés de sessions NwkSKey, AppSKey associés à l'identifiant DevUID, sans que l'objet 1 n'en soit informé. Ainsi, tout message de référence émis par l'objet 1 après acceptation par le serveur 2 de cette requête d'adhésion « pirate » sera rejeté, leurs codes d'intégrité MIC n'ayant pas été calculés sur les dernières clés de session NwkSKey, AppSKey acceptées par le serveur 2.

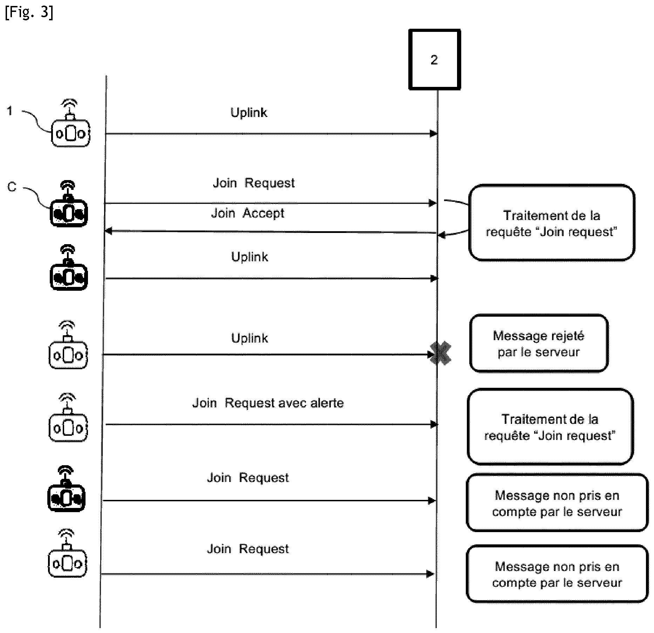

Un tel scénario est illustré en **figure 3****,** laquelle montre des échanges de message entre l'objet 1 mettant en œuvre le procédé de la figure 2, le serveur 2 et un clone C cherchant à se faire passer pour l'objet 1 dans un réseau LoRaWAN. Sur la figure 3, le clone C est illustré par une icône sombre et l'objet 1 est illustré par une icône comparativement plus claire.

L'objet 1 met en œuvre une étape de détection d'un rejet ou d'une non-prise en compte d'un message de référence transmis par l'objet 1 au serveur 2 (étape 110).

Par exemple, l'objet 1 détecte une non prise en compte ou un rejet du message de référence lorsqu'aucun accusé de réception du message de référence n'est reçu par l'objet 1 dans un délai prédéterminé à compter de la transmission du message de référence. Pour cela, l'objet 1 peut utiliser un compteur de temps qui est réinitialisé à chaque fois que le délai expire ou qu'un accusé réception est reçu.

En réponse à la détection 110, l'objet 1 transmet au serveur 2 génère un message d'alerte indiquant le rejet ou la non prise en compte du message de référence (étape 112), et le transmet au serveur 2 (étape 114).

Il est à noter que l'étape 114 de transmission du message d'alerte peut être déclenchée après une seule tentative infructueuse de transmissions d'un message de référence, ou bien seulement après N tentatives infructueuses de transmissions d'un message de référence, N étant strictement supérieur à 1, par exemple égal à 3.

Le message d'alerte est de préférence une nouvelle requête d'adhésion au réseau d'objets connectés. Ceci présente plusieurs avantages. Premièrement, le fait de réutiliser une requête déjà existante dans le protocole de communication utilisé a pour effet de ne pas complexifier de manière importante ce protocole de communication. Autrement dit, cette fonction complémentaire d'alerte est par conséquent plus facile à déployer via mise à jour dans un objet 1 déjà utilisé. Deuxièmement, le fait d'utiliser spécifiquement une requête d'adhésion pour assurer cette fonction d'alerte présente l'avantage de limiter les échanges de communication pour permettre à l'objet 1 de non seulement remonter une alerte mais également de reprendre la main sans délai sur la communication préalablement interrompue tacitement par le clone C.

Dans la suite, on établit une distinction entre des requêtes d'adhésion avec fonction d'alerte, et requêtes d'adhésion classiques n'assurant pas cette fonction additionnelle d'alerte.

De manière générale, une requête d'adhésion avec fonction d'alerte se distingue d'une requête d'adhésion classique de la manière suivante :
- Une requête d'adhésion classique comprend, en un emplacement prédéfini, une première valeur n'indiquant pas de rejet ou de non prise en compte d'un quelconque message de référence transmis par l'objet 1.
- Une requête d'adhésion avec fonction d'alerte comprend, en lieu et place de la première valeur au même emplacement prédéfini, une deuxième valeur indiquant le rejet ou la non prise en compte d'un message de référence transmis par l'objet 1.

Comme indiqué précédemment, le champ DevNonce d'une requête « join-request » est occupé par un nonce ayant une première valeur choisie dans une plage de valeurs prédéterminée.

Par conséquent, une requête d'adhésion de type « join-request » avec fonction d'alerte diffère de préférence d'une requête d'adhésion de type « join-request » sans fonction d'alerte par le remplacement, dans le champ DevNonce, de la première valeur par une deuxième valeur exclue de cette plage de valeurs prédéterminée, cette deuxième valeur étant elle-même prédéterminée.

De préférence, la deuxième valeur est égale à 0 ou égal à 2^{N}-1 (c'est-à-dire le nombre dont la représentation comprend N bits tous égaux à 1). Ces deux valeurs particulières sont les valeurs minimale et maximales codables sur N bits.

En particulier, le champ DevNonce comprend 2 octets (N=6). La deuxième valeur peut dans ce cas être égale à 0x0000 ou 0xFFFF.

Choisir l'une ou l'autre des valeurs extrémales 0 et 2^{N}-1 présente l'avantage de très peu perturber le fonctionnement du serveur 2 se servant du contenu du champ DevNonce pour détecter des attaques par rejeu, puisque toutes les valeurs que peuvent prendre le nonce transmis dans le champ DevNonce d'une requête d'adhésion classique sont choisies dans un unique intervalle. Ceci est particulièrement vrai dans certains modes de réalisation où le nonce que l'objet 1 insère dans le champ DevNonce n'est pas choisi de manière totalement aléatoire, mais plutôt par incrémentation d'un compteur.

Parmi ces deux valeurs, choisir 2^{N}-1 comme deuxième valeur (d'alerte) présente l'avantage de perturber au minimum de telles implémentations à base de compteur, puisqu'un compteur est conventionnellement réinitialisé à la valeur 0. A l'opposé, choisir 0 comme deuxième valeur (d'alerte) présente l'avantage d'être clairement identifiable car indépendante de N.

En variante, un bit parmi les N du champ DevNonce peut être réserver pour l'alerte de clonage potentiel (par exemple, 1 peut signifier l'alerte, tandis que 0 peut signifier l'absence d'alerte). Cette variante présente toutefois l'inconvénient de diviser sensiblement par deux la taille de la plage de valeurs dans laquelle le nonce est choisi, ce qui réduit par conséquent l'efficacité du mécanisme de protection contre des attaques par rejeu auquel ce nonce est destiné.

En recevant le message d'alerte par son interface de communication 16, le serveur 2 est mis au courant d'une potentielle existence d'un clone dans le réseau se faisant passer pour l'objet 1, et peut y remédier par un traitement approprié.

En réponse à la réception d'un tel message d'alerte, une solution radicale que le processeur 20 peut mettre en œuvre pour empêcher le clone C d'accéder au réseau d'objets connectés est tout simplement de refuser toute requête d'adhésion ultérieure qui comprendrait le même DevEUI que celui remonté dans la requête d'adhésion avec alerte.

Pour renforcer la confiance du message d'alerte émis, il peut être prévu d'inclure dans le message d'alerte un code d'intégrité (MIC dans le cas LoRaWAN) généré par l'objet 1 sur la base d'une clé secrète différente de celle utilisée pour générer un code d'intégrité inclus dans une requête d'adhésion classique. Les fonctions prenant en entrée ces deux clés différentes pour générer les codes d'intégrités dans le message d'alarme et dans une requête d'adhésion classique sont identiques. Ce mécanisme présente l'avantage d'être facile à déployer dans des réseaux existants, notamment dans le cas où le message d'alerte est en fait une requête d'adhésion contenant une information d'alerte.

## Revendications

1. Procédé de communication d'un objet (1) avec un serveur (2) d'un réseau d'objets connectés pour signaler qu'un clone se fait potentiellement passer pour l'objet dans le réseau, le procédé comprenant les étapes suivantes mises en œuvre par l'objet (1) :
- transmission (106) au serveur (2) d'une requête d'adhésion de l'objet (1) au réseau d'objets connectés,
- après la transmission de la requête d'adhésion, détection (110) d'un rejet ou d'une non-prise en compte d'un message de référence transmis par l'objet (1) au serveur (2),
- en réponse à la détection, transmission (114) au serveur (2) d'un message d'alerte indiquant le rejet ou la non prise en compte.

2. Procédé selon l'une des revendications précédentes, dans lequel le message d'alerte est une nouvelle requête d'adhésion au réseau d'objets connectés.

3. Procédé selon l'une des revendications précédentes, dans lequel la requête d'adhésion transmise avant la détection comprend une première valeur n'indiquant pas de rejet ou de non prise en compte d'un quelconque message transmis par l'objet (1) au serveur (2), et la nouvelle requête d'adhésion comprend, en lieu et place de la première valeur, une deuxième valeur indiquant le rejet ou la non prise en compte.

4. Procédé selon la revendication 3, dans lequel la première valeur est un nonce destiné à être utilisé par le serveur pour détecter des attaques par rejeu.

5. Procédé selon l'une des revendications 3 à 4, dans lequel la première valeur occupe un emplacement prédéterminé de N bits dans la requête d'adhésion transmise avant la détection, la deuxième valeur occupe le même emplacement prédéterminé de N bits dans la nouvelle requête d'adhésion, et la deuxième valeur est égale à zéro ou 2^{N}-1.

6. Procédé selon l'une des revendications 3 à 5, dans lequel la première valeur et la deuxième valeur occupent le champ DevNonce défini par une spécification LoRaWAN.

7. Procédé selon l'une des revendications précédentes, dans lequel le message de référence est transmis par l'objet (1) au serveur après la requête d'adhésion, et transporte par exemple des données utiles.

8. Procédé selon l'une des revendications précédentes, dans lequel il est détecté une non prise en compte du message de référence lorsqu'aucun accusé de réception du message de référence n'est reçu par l'objet dans un délai prédéterminé à compter de la transmission du message de référence.

9. Procédé selon l'une des revendications précédentes, comprenant en outre un rejet ou une non prise en compte par le serveur d'une requête d'adhésion qui est transmise au serveur après le message d'alerte et qui comprend un identifiant unique propre à l'objet.

10. Procédé selon l'une des revendications précédentes, dans lequel la requête d'adhésion ou le message de référence comprend un code d'intégrité généré à partir d'une première clé secrète propre à l'objet (1), et dans lequel le message d'alerte comprend un code d'intégrité généré à partir d'une deuxième clé secrète propre à l'objet (1) différente de la première clé secrète.

11. Procédé selon la revendication précédente, dans lequel le code d'intégrité de la requête d'adhésion ou du message de référence est généré par application d'une fonction prédéterminée à la première clé secrète propre à l'objet (1), et dans lequel le code d'intégrité du message d'alerte est généré par application de la même fonction prédéterminée à la deuxième clé secrète propre à l'objet (1).

12. Objet (1) comprenant une interface de communication (14) avec un serveur (2) d'un réseau d'objets connectés, l'objet (1) comprenant par ailleurs un processeur (10) configuré pour :
- commander une transmission au serveur (2) d'une requête d'adhésion de l'objet (1) au réseau d'objets connectés,
- après la transmission de la requête d'adhésion, détecter un rejet ou une non-prise en compte d'un message de référence transmis par l'objet (1) au serveur (2),
- en réponse à la détection, commander une transmission au serveur (2) d'un message d'alerte indiquant le rejet ou la non prise en compte.

13. Système comprenant un objet selon la revendication précédente, et un serveur d'un réseau d'objets connecté configuré pour :
- sur réception du message d'alerte, mettre en œuvre un traitement permettant de détecter si un clone se fait passer pour l'objet dans le réseau.

14. Système selon la revendication précédente, dans lequel le serveur est en outre configuré pour rejeter ou ne pas prendre en compte une requête d'adhésion transmise au serveur après le message d'alerte et qui comprend un identifiant unique propre à l'objet.

## Patentansprüche

1. Kommunikationsverfahren eines Objekts (1) mit einem Server (2) eines Netzwerks von verbundenen Objekten zur Signalisierung, dass sich ein Klon potenziell für das Objekt in dem Netzwerk ausgibt, wobei das Verfahren die folgenden von dem Objekt (1) umgesetzten Schritte umfasst:
- Senden (106) an den Server (2) einer Beitrittsanfrage des Objekts (1) zum Netzwerk von verbundenen Objekten,
- nach dem Senden der Beitrittsanfrage, Detektieren (110) einer Ablehnung oder Nicht-Berücksichtigung einer von dem Objekt (1) an den Sever (2) gesendeten Referenzmeldung,
- als Reaktion auf die Detektion, Senden (114) an den Server (2) einer Warnmeldung, die die Ablehnung oder Nicht-Berücksichtigung anzeigt.

2. Verfahren nach einem der vorstehenden Ansprüche, wobei die Warnmeldung eine neue Beitrittsanfrage zum Netzwerk von verbundenen Objekten ist.

3. Verfahren nach einem der vorstehenden Ansprüche, wobei die vor der Detektion gesendete Beitrittsanfrage einen ersten Wert umfasst, der keine Ablehnung oder Nicht-Berücksichtigung einer beliebigen von dem Objekt (1) an den Server (2) gesendeten Meldung anzeigt, und die neue Beitrittsanfrage anstelle des ersten Werts einen zweiten Wert umfasst, der die Ablehnung oder Nicht-Berücksichtigung anzeigt.

4. Verfahren nach Anspruch 3, wobei der erste Wert eine Zufallszahl ist, die dazu bestimmt ist, durch den Server verwendet zu werden, um Replay-Attacken zu detektieren.

5. Verfahren nach einem der Ansprüche 3 bis 4, wobei der erste Wert einen vorbestimmten Platz von N Bits in der vor der Detektion gesendeten Beitrittsanfrage einnimmt, der zweite Wert denselben vorbestimmten Platz von N Bits in der neuen Beitrittsanfrage einnimmt, und der zweite Wert gleich Null oder 2^{N}-1 ist.

6. Verfahren nach einem der Ansprüche 3 bis 5, wobei der erste Wert und der zweite Wert das Feld DevNonce einnehmen, das durch eine LoRaWAN Spezifikation definiert wird.

7. Verfahren nach einem der vorstehenden Ansprüche, wobei die Referenzmeldung nach der Beitrittsanfrage von dem Objekt (1) an den Server gesendet wird, und beispielsweise Nutzdaten transportiert.

8. Verfahren nach einem der vorstehenden Ansprüche, wobei eine Nicht-Berücksichtigung der Referenzmeldung detektiert wird, wenn keine Empfangsbestätigung der Referenzmeldung von dem Objekt innerhalb einer vorbestimmten Frist ab der Sendung der Referenzmeldung empfangen wird.

9. Verfahren nach einem der vorstehenden Ansprüche, weiter eine Ablehnung oder eine Nicht-Berücksichtigung einer Beitrittsanfrage durch den Server umfassend, die nach der Warnmeldung an den Server gesendet wird, und die eine, dem Objekt eigene eindeutige Kennung umfasst.

10. Verfahren nach einem der vorstehenden Ansprüche, wobei die Beitrittsanfrage oder die Referenzmeldung einen Integritätscode umfasst, der aus einem ersten, dem Objekt (1) eigenen Geheimschlüssel erzeugt wird, und wobei die Warnmeldung einen Integritätscode umfasst, der aus einem zweiten, dem Objekt (1) eigenen Geheimschlüssel erzeugt wird, der sich von dem ersten Geheimschlüssel unterscheidet.

11. Verfahren nach dem vorstehenden Anspruch, wobei der Integritätscode der Beitrittsanfrage oder der Referenzmeldung durch Anwenden einer vorbestimmten Funktion auf den ersten dem Objekt (1) eigenen Geheimschlüssel erzeugt wird, und wobei der Integritätscode der Warnmeldung durch Anwenden derselben vorbestimmten Funktion auf den zweiten dem Objekt (1) eigenen Geheimschlüssel erzeugt wird.

12. Objekt (1), umfassend eine Kommunikationsschnittstelle (14) mit einem Server (2) eines Netzwerks von verbundenen Objekten, wobei das Objekt (1) darüber hinaus einen Prozessor (10) umfasst, der konfiguriert ist zum:
- Befehlen einer Sendung an den Server (2) einer Beitrittsanfrage des Objekts (1) zum Netzwerk von verbundenen Objekten,
- nach dem Senden der Beitrittsanfrage, Detektieren einer Ablehnung oder Nicht-Berücksichtigung einer von dem Objekt (1) an den Sever (2) gesendeten Referenzmeldung,
- als Reaktion auf die Detektion, Befehlen einer Sendung an den Server (2) einer Warnmeldung, die die Ablehnung oder die Nicht-Berücksichtigung anzeigt.

13. System, umfassend ein Objekt nach dem vorstehenden Anspruch, und einen Server eines Netzwerks von verbundenen Objekten, das konfiguriert ist zum:
- Durchführen, bei Empfang der Warnmeldung, einer Verarbeitung, die es ermöglicht, zu detektieren, ob sich ein Klon potenziell für das Objekt in dem Netzwerk ausgibt.

14. System nach dem vorstehenden Anspruch, wobei der Server weiter konfiguriert ist, um eine nach der Warnmeldung an den Server gesendete Beitrittsanfrage abzulehnen oder nicht zu berücksichtigen, und eine dem Objekt eigene, eindeutige Kennung umfasst.

## Claims

1. A method for communication of an object (1) with a server (2) of a network of connected objects to signal that a clone potentially masquerades as the object in the network, the method comprising the following steps implemented by the object (1):
- transmitting (106) to the server (2) a join request for joining the object (1) to the network of connected objects,
- after the transmission of the join request, detecting (110) a rejection or non-consideration of a reference message transmitted by the object (1) to the server (2),
- in response to the detection, transmitting (114) to the server (2) an alert message indicating the rejection or non-consideration.

2. The method according to one of the preceding claims, wherein the alert message is a new join request for joining the network of connected objects.

3. The method according to one of the preceding claims, wherein the join request transmitted before detection comprises a first value not indicating rejection or non-consideration of any message transmitted by the object (1) to the server (2), and the new join request comprises, instead of the first value, a second value indicating the rejection or non-consideration.

4. The method according to claim 3, wherein the first value is a nonce intended to be used by the server to detect replay attacks.

5. The method according to one of claims 3 to 4, wherein the first value occupies a predetermined location of N bits in the join request transmitted before the detection, the second value occupies the same predetermined location of N bits in the new join request, and the second value is equal to zero or 2^{N}-1.

6. The method according to one of claims 3 to 5, wherein the first value and the second value occupy the DevNonce field defined by a LoRaWAN specification.

7. The method according to one of the preceding claims, wherein the reference message is transmitted by the object (1) to the server after the join request, and for example carries payload data.

8. The method according to one of the preceding claims, wherein a non-consideration of the reference message is detected when no acknowledgement of receipt of the reference message is received by the object within a predetermined timeframe starting from the transmission of the reference message.

9. The method according to one of the preceding claims, further comprising a rejection or non-consideration by the server of a join request which is transmitted to the server after the alert message and which comprises a unique identifier specific to the object.

10. The method according to one of the preceding claims, wherein the join request or the reference message comprises an integrity code generated from a first secret key specific to the object (1), and wherein the alert message comprises an integrity code generated from a second secret key specific to the object (1) different from the first secret key.

11. The method according to the preceding claim, wherein the integrity code of the join request or of the reference message is generated by applying a predetermined function to the first secret key specific to the object (1), and wherein the integrity code of the alert message is generated by applying the same predetermined function to the second secret key specific to the object (1).

12. An object (1) comprising an interface (14) for communicating with a server (2) of a network of connected objects, the object (1) further comprising a processor (10) configured for:
- ordering a transmission to the server (2) of a request for joining the object (1) to the network of connected objects,
- after the transmission of the join request, detecting a rejection or non-consideration of a reference message transmitted by the object (1) to the server (2),
- in response to the detection, ordering a transmission to the server (2) of an alert message indicating the rejection or non-consideration.

13. A system comprising an object according to the preceding claim, and a server of a network of connected objects configured for:
- upon reception of the alert message, implementing a processing allowing to detect whether a clone masquerades as the object in the network.

14. The system according to the preceding claim, wherein the server is further configured to reject or not consider a join request transmitted to the server after the alert message and which comprises a unique identifier specific to the object.
